# EUROPEAN PATENT APPLICATION

(11) **EP 3 588 630 A1**
(43) Date of publication of application: **01.01.2020**
(21) Application number: 19182874.8
(22) Date of filing: 27.06.2019
(51) Int. Cl.: H01M 4/131, H01M 4/136, H01M 4/36, H01M 4/505, H01M 4/525, H01M 4/58, H01M 4/02, H01M 10/0525

(54) **POSITIVE ELECTRODE PLATE AND LITHIUM ION BATTERY**

(30) Priority: 28.06.2018 CN 201810688202
(71) Applicant: Contemporary Amperex Technology Co., Limited, Jiaocheng District Ningde City, Fujian 352100 (CN)
(72) Inventor: DU, Rui, Fujian, 352100 (CN); LIU, Na, Fujian, 352100 (CN); YAN, Chuanmiao, Fujian, 352100 (CN); LIU, Yongchao, Fujian, 352100 (CN)
(74) Representative: Würmser, Julian

(57) **Abstract**

Provided are a positive electrode plate and a lithium ion battery. The positive electrode plate includes a positive electrode current collector and a positive electrode active material layer. The positive electrode active material layer includes a first sub-layer as the outermost sub-layer of the positive active material layer, and a second sub-layer disposed between the positive electrode current collector and the first sub-layer. The first sub-layer includes a first positive electrode active material, the second sub-layer includes a second positive electrode active material. The first positive electrode active material is one or more of a ternary positive electrode material having a monocrystalline or quasi-monocrystalline structure, and a coating-modified material thereoff. The present disclosure can improve energy density of the lithium ion battery and reduce gas production of the lithium ion battery, so that the lithium ion battery has high energy density and good storage performance at the same time.

## Description

### TECHNICAL FIELD

The present disclosure relates to the field of batteries, and in particular, to a positive electrode plate and a lithium ion battery.

### BACKGROUND

In order to obtain a lithium ion battery with a high energy density, the positive electrode plate is generally required to have a high compaction density. The conventional positive electrode active material, such as a ternary positive electrode material, is in form of secondary particles formed by agglomeration of primary particles. However, as the bonding force between the primary particles inside the secondary particles is not strong, the secondary particles are likely to be crushed under pressure during cold pressing of the positive electrode plate. Particularly, the positive electrode active material particles at the contact position between the surface of the positive electrode plate and the cold pressing roller are extremely prone to crushing, which consequently lead to an increased gas production of the lithium ion battery at high temperatures.

At present, in view of the above problems, a common improvement strategy is to reduce the compaction density of the positive electrode plate so as to reduce the cold pressing pressure of the cold pressure roller on the positive electrode plate. However, such strategy can lead to a decrease in the energy density of the lithium ion battery, and thus the lithium ion battery cannot satisfy people's use requirements on the high energy density.

### SUMMARY

In view of the problems in the prior art, the object of the present disclosure is to provide a positive electrode plate and a lithium ion battery, which can improve the energy density of the lithium ion battery and reduce the gas production of the lithium ion battery, thereby endowing the lithium ion battery with a high energy density and a good storage performance at the same time.

In a first aspect, the present disclosure provides a positive electrode plate including a positive electrode current collector and a positive electrode active material layer disposed on the positive electrode current collector. The positive electrode active material layer includes a first sub-layer and a second sub-layer. The first sub-layer is the outermost sub-layer of the positive active material layer, and the second sub-layer is disposed between the positive electrode current collector and the first sub-layer. The first sub-layer includes a first positive electrode active material, the second sub-layer includes a second positive electrode active material, and the first positive electrode active material is one or more of a ternary positive electrode material having a monocrystalline or quasi-monocrystalline structure, and a coating-modified material thereof. The ternary positive electrode material has a molecular formula of Liₓ₁(Niₐ₁Co_{b1}M_{c1})_{1-d1}N_{d1}O_{2-y1}A_{y1}, wherein M is one or two of Mn or Al; N is selected from the group consisting of Mg, Ti, Zn, Zr, Nb, Sr, Y, Al, and combinations thereof; A is selected from the group consisting of F, Cl, S, and combinations thereof; 0.95≤x1≤1.05, 0<a1<1, 0<b1<1, 0<c1<1, a1+b1+c1=1, 0≤d1≤0.1, and 0≤y1≤0.1. The coating-modified material includes a coating on the ternary positive electrode material having the molecular formula of Liₓ₁(Niₐ₁Co_{b1}M_{c1})_{1-d1}N_{d1}O_{2-y1}A_{y1}, and the coating is selected from the group consisting of a carbon coating, a graphene coating, an oxide coating, an inorganic salt coating, a conductive polymer coating, and combinations thereof.

In a second aspect, the present disclosure provides a lithium ion battery including the positive electrode plate according to the first aspect.

Compared with common technologies, the present disclosure has at least the following beneficial effects:
(1) In the positive electrode plate of the present disclosure, the first positive electrode active material of the first sub-layer, i.e., the outermost layer, of the positive electrode active material layer is a ternary positive electrode material having a monocrystalline or quasi-monocrystalline structure, which has high mechanical strength and is hardly crushed, thereby increasing the compaction density of the positive electrode plate and the energy density of the lithium ion battery, and also alleviating the gas production problem caused by the crushing of particles;
(2) The first sub-layer in the positive electrode plate of the present disclosure also has a certain protective effect on the structural stability of the second sub-layer located between the first sub-layer and the positive electrode current collector, conducive to the improvement of the processing performance of the positive electrode plate and taking full advantage of the capacity of the second positive electrode active material.

### DESCRIPTION OF EMBODIMENTS

The positive electrode plate and the lithium ion battery according to the present disclosure are described in detail below.

First, the positive electrode plate according to the first aspect of the present disclosure is elaborated.

The positive electrode plate according to the first aspect of the present disclosure includes a positive electrode current collector and a positive electrode active material layer disposed on the positive electrode current collector. The positive electrode active material layer includes a first sub-layer as the outermost sub-layer of the positive active material layer, and a second sub-layer disposed between the positive electrode current collector and the first sub-layer. The first sub-layer includes a first positive electrode active material, and the second sub-layer includes a second positive electrode active material. The first positive electrode active material is one or more of a ternary positive electrode material having a monocrystalline or quasi-monocrystalline structure, and a coating-modified material thereof. The ternary positive electrode material has a molecular formula of Liₓ₁(Niₐ₁Co_{b1}M_{c1})_{1-d1}N_{d1}O_{2-y1}A_{y1}, in which M is one or two of Mn or Al, N is selected from the group consisting of Mg, Ti, Zn, Zr, Nb, Sr, Y, Al, and combinations thereof, A is selected from the group consisting of F, Cl, S, and combinations thereof, 0.95≤x1≤1.05, 0<a1<1, 0<b1<1, 0<c1<1, a1+b1+c1=1, 0≤d1≤0.1, and 0≤y1≤0.1. The coating-modified material includes a coating on a surface the ternary positive electrode material, and the coating is selected from the group consisting of a carbon coating, a graphene coating, an oxide coating, an inorganic salt coating, a conductive polymer coating, and combinations thereof.

Preferably, 0.3≤a1≤0.95, 0.02≤b1≤0.5, 0.02≤c1≤0.5, and a1+b1+c1 = 1. More preferably, 0.5≤a1≤0.9, 0.02≤b1≤0.35, 0.02≤c1≤0.35, and a1+b1+c1=1.

Preferably, 0≤d1≤0.08. More preferably, 0≤d1≤0.05.

Preferably, 0≤y1≤0.08. More preferably, 0≤y1≤0.05.

Preferably, the ternary positive electrode material having the molecular formula of Liₓ₁(Niₐ₁Co_{b1}M_{c1})_{1-d1}N_{d1}O_{2-y1}A_{y1} includes one or more of LiNi_{1/3}Co_{1/3}Mu_{1/3}O₂ (NCM111), LiNi_{0.4}Co_{0.2}Mn_{0.4}O₂ (NCM424), LiNi_{0.5}Co_{0.2}Mn_{0.3}O₂ (NCM523), LiNi_{0.6}Co_{0.2}Mn_{0.2}O₂ (NCM622), LiNi_{0.8}Co_{0.1}Mn_{0.1}O₂ (NCM811), and LiNi_{0.85}Co_{0.15}Al_{0.05}O₂.

In the positive electrode plate according to the first aspect of the present disclosure, the first sub-layer located at the outermost sub-layer of the positive electrode active material layer contains only the ternary positive electrode material having the monocrystalline or quasi-monocrystalline structure. The ternary positive electrode material having the monocrystalline structure refers to a ternary positive electrode material, in which the primary particles have a particle size greater than 1 µm and are not apparently agglomerated. The ternary positive electrode material having the quasi-monocrystalline structure (or monocrystalline-like structure) refers to a ternary positive electrode material, in which the primary particles have a particle size greater than 1 µm and are slightly agglomerated. These ternary positive electrode materials have a high mechanical strength and are unlikely to be broken, such that they can significantly alleviate the problem that the positive electrode active material particles can be easily crushed during the cold pressing process of the positive electrode plate, thereby increasing the compaction density of the positive electrode plate, enhancing the energy density of the lithium ion battery, and alleviating the gas production problem caused by the crushing of particles. In addition, the first sub-layer also has a certain protective effect on the structural stability of the second sub-layer disposed between the first sub-layer and the positive electrode current collector, conducive to the improvement of the processing performance of the positive electrode plate and taking full advantage of the capacity of the second positive electrode active material. At the same time, the ternary positive electrode materials, due to its high gram capacity, can also guarantee a high energy density of the lithium ion battery.

The coating modification is a modification by forming a coating on the surface of the first positive electrode active material to isolate the first positive electrode active material from directly contacting the electrolyte, which can greatly reduce the side reactions between the electrolyte and the first positive electrode active material. In this way, the dissolution of transition metals can be reduced, the mechanical strength and electrochemical stability of the first positive electrode active material can be improved, so as further alleviate the gas generation problem caused by the crushing of particles. The presence of the coating can also reduce the collapse of the crystalline structure of the first positive electrode active material during the repeated charging and discharging process, which is conducive to the improvement of cycle performance. The specific method for coating modification is not limited herein, which can be a wet coating performed in a precursor co-precipitation stage or a dry coating performed in a sintering stage. The coating can be selected from the group consisting of a carbon coating, a graphene coating, an oxide coating, an inorganic salt coating, a conductive polymer coating, and combinations thereof. The oxide can be an oxide of one or more elements of Al, Ti, Mn, Zr, Mg, Zn, Ba, Mo, and B. The inorganic salt can be selected from the group consisting of Li₂ZrO₃, LiNbO₃, Li₄Ti₅O₁₂, Li₂TiO₃, LiTiO₂, Li₃VO_{4,} LiSnO₃, Li₂SiO₃, LiAlO₂, AlPO₄, AlF₃, and combinations thereof. The conductive polymer can be polypyrrole (PPy), poly 3,4-ethylenedioxythiophene (PEDOT) or polyamide (PI).

In the positive electrode plate according to the first aspect of the present disclosure, the first positive electrode active material preferably has a volume average particle size (Dᵥ₅₀) D1 in a range of 1 µm to 10 µm, and the second positive electrode active material has a volume average particle size (Dᵥ₅₀) D2 in a range of 5 µm to 15 µm. When the first positive electrode active material and the second positive electrode active material in the above ranges are used together, the particles in the interior of the positive electrode plate have relatively large particle size, porosity and a strong lithium ion transport ability, and meanwhile the particles on the surface of the positive electrode plate are relatively small and have a relatively denser structure and a good mechanical performance. In this regard, the positive electrode plate has an improved mechanical strength, and a better liquid retention ability for the electrolyte, such that the lithium ions can be transmitted, and thus the lithium ion battery has a good dynamic performance. More preferably, D1 and D2 also satisfy a relationship of 0.2× D2≤D1≤0.8×D2.

In the positive electrode plate according to the first aspect of the present disclosure, preferably, at least a portion of the second positive electrode active material has a polycrystalline structure. When the first positive electrode active material in the first sub-layer (i.e., the ternary positive electrode material Liₓ₁(Niₐ₁Co_{b1}M_{c1})_{1-d1}N_{d1}O_{2-y1}A_{y1}) has a monocrystalline or quasi-monocrystalline structure, the problems of the low compressive strength and crushing of the conventional ternary positive electrode material (in form of agglomerated secondary particles) can be effectively alleviated. However, when the positive electrode active materials of both the first sub-layer and the second sub-layer both have a monocrystalline or quasi-monocrystalline structure, even the processing performance and mechanical performance of the positive electrode plate are improved and the positive electrode active material particles on the surface of the positive electrode plate are not prone to crushing, due to the significant polarization of the positive electrode active material particles having the monocrystalline or quasi-monocrystalline structure, the direct current internal resistance of the lithium ion battery is more likely to increase, and the positive electrode active material having the monocrystalline or quasi-monocrystalline structure has a smaller reversible gram capacity than that having the polycrystalline structure, which is not conducive to further increasing the energy density of the lithium ion battery.

More preferably, at least a portion of the second positive electrode active material has a polycrystalline structure, and the remainder thereof has a monocrystalline or quasi-monocrystalline structure. On the one hand, the second positive electrode active material having the monocrystalline or quasi-monocrystalline structure can further improve the processing performance and mechanical performance of the entire positive electrode plate, and on the other hand, the combination of the positive electrode active material particles of the polycrystalline structure and the positive electrode active material particles of the oriented monocrystalline or quasi-monocrystalline structure facilitates a close stacking of the particles, thereby further increasing the compaction density of the positive electrode plate and increasing the energy density of the lithium ion battery.

In the positive electrode plate according to the first aspect of the present disclosure, the second positive electrode active material can be one or more of lithium cobalt oxide (LiCoO₂), lithium nickel oxide (LiNiO₂), lithium manganese oxide (LiMnO₂), lithium nickel manganese oxide (LiNi₁₋ₐMnₐO₂, 0<a<1), a ternary positive electrode material, lithium-containing phosphate having an olivine structure, and a doping-modified and/or coating-modified composite material thereof. The lithium-containing phosphate having the olivine structure can be selected from the group consisting of lithium iron phosphate (LiFePO₄), lithium manganese phosphate (LiMnPO₄), lithium manganese iron phosphate (LiFe₁₋ₐMnₐPO₄, 0<a<1), and combinations thereof.

The doping modification can be a modification of cation doping, anion doping or anion-cation complex doping. The doping modification aims to dope some cationic, anionic or complex ions in the lattice of the above positive electrode active material, so that the crystalline structure of the positive electrode active material becomes more complete and more stable, thereby improving the cycle performance and thermal stability. The specific method of doping modification is not limited herein, which can be a wet doping performed in the precursor co-precipitation stage or a dry doping performed in the sintering stage. Preferably, element of the cation doping can be one or more of Al, Zr, Ti, B, Mg, V, Cr, Zn, Nb, Sr, and Y. Preferably, element of the anion doping can be one or more of F, Cl, and S, and more preferably F. Fluorine can promote the sintering of the positive electrode active material to stabilize the crystalline structure of the positive electrode active material, and it can also stabilize the interface between the positive electrode active material and the electrolyte during cycling, which is conducive to the improvement of the cycle performance.

The coating modification is a modification by forming a coating on the surface of the first positive electrode active material to isolate the first positive electrode active material from directly contacting the electrolyte, which can greatly reduce the side reactions between the electrolyte and the first positive electrode active material. In this way, the dissolution of transition metals can be reduced, the mechanical strength and electrochemical stability of the first positive electrode active material can be improved, so as further alleviate the gas generation problem caused by the crushing of particles. The presence of the coating can also reduce the collapse of the crystalline structure of the first positive electrode active material during the repeated charging and discharging process, which is conducive to the improvement of cycle performance. The specific method for coating modification is not limited herein, which can be a wet coating performed in a precursor co-precipitation stage or a dry coating performed in a sintering stage. The coating can be selected from the group consisting of a carbon coating, a graphene coating, an oxide coating, an inorganic salt coating, a conductive polymer coating, and combinations thereof. The oxide can be an oxide of one or more elements of Al, Ti, Mn, Zr, Mg, Zn, Ba, Mo, and B. The inorganic salt can be selected from the group consisting of Li₂ZrO₃, LiNbO₃, Li₄Ti₅O₁₂, Li₂TiO₃, LiTiO₂, Li₃VO₄, LiSnO₃, Li₂SiO₃, LiAlO₂, AlPO₄, AlF₃, and combinations thereof. The conductive polymer can be polypyrrole (PPy), poly 3,4-ethylenedioxythiophene (PEDOT) or polyamide (PI).

Preferably, the second positive electrode active material is one or more of a ternary positive electrode materials having a molecular formula of Liₓ₂(Niₐ₂Co_{b2}M'_{c2})_{1-d2}N'_{d2}O_{2-y2}A'_{y2}, and a coating-modified material thereof, where M' is one or two of Mn, or Al, N' is selected from the group consisting of Mg, Ti, Zn, Zr, Nb, Sr, Y, Al, and combinations thereof, A' is selected from the group consisting of F, Cl, S, and combinations thereof, 0.7≤x2≤1.05, 0<a2<1, 0<b2<1, 0<c2<1, a2+b2+c2=1, 0≤d2≤0.1, and 0≤y2≤0.1. The coating coating-modified material includes a coating on a surface the ternary positive electrode material having the molecular formula of Liₓ₂(Niₐ₂Co_{b2}M'_{c2})_{1-d2}N'_{d2}O_{2-y2}A'_{y2}, and the coating is selected from the group consisting of a carbon coating, a graphene coating, an oxide coating, an inorganic salt coating, a conductive polymer coating, and combinations thereof.

Preferably, 0.3≤a2≤0.9, 0.03≤b2≤0.4, 0.03≤c2≤0.4, and a2+b2+c2=1. More preferably, 0.5≤a2≤0.9, 0.03≤b2≤0.35, 0.03≤c2≤0.35, and a2+b2+c2=1.

Preferably, 0≤d2≤0.08. More preferably, 0.001≤d2≤0.05.

Preferably, 0≤y2≤0.08. More preferably, 0≤y2≤0.05.

Preferably, a1≤a2. That is, a ternary positive electrode material having a relatively low nickel content is used in the first sub-layer, and a ternary positive electrode material having a relatively high nickel content is used in the second sub-layer. With the increasing of the nickel content of the ternary positive electrode material, the energy density is increased, but the thermal stability and structural stability deteriorate. Thus, the relatively low nickel content of the first sub-layer can ensure a low oxidative activity of the outermost sub-layer of the positive electrode plate, and a low probability of occurrence of the side reactions between the electrolyte and the surface of the positive electrode plate, as well as a small gas production amount of the lithium ion battery. Meanwhile, the relatively low nickel content of the first sub-layer also ensures higher structural stability, mechanical strength and thermal stability of the positive electrode plate as a whole. In this way, the high energy density of the high nickel content ternary positive electrode material of the second sub-layer can be fully utilized, so that the positive electrode plate has a higher reversible capacity.

Preferably, the ternary positive electrode material Liₓ₂(Niₐ₂Co_{b2}M'_{c2})_{1-d2}N'_{d2}O_{2-y2}A'_{y2} includes LiNi_{1/3}Co_{1/3}Mn_{1/3}O₂ (NCM111), LiNi_{0.4}Co_{0.2}Mn_{0.4}O₂ (NCM424), LiNi_{0.5}Co_{0.2}Mn_{0.3}O₂ (NCM523), LiNi_{0.6}Co_{0.2}Mn_{0.2}O₂ (NCM622), LiNi_{0.8}Co_{0.1}Mn_{0.1}O₂ (NCM811), and LiNi_{0.85}Co_{0.15}Al_{0.05}O₂.

The specific ternary positive electrode materials used in the first sub-layer and in the second sub-layer can be identical or different.

Preferably, the second positive active material is a mixture of the ternary positive electrode material Liₓ₂(Niₐ₂Co_{b2}M'_{c2})_{1-d2}N'_{d2}O_{2-y2}A'_{y2} having the polycrystalline structure and the ternary positive electrode material Liₓ₂(Niₐ₂Co_{b2}M'_{c2})_{1-d2}N'_{d2}O_{2-y2}A'_{y2} having a monocrystalline or quasi-monocrystalline structure. When the second positive electrode active material includes both the ternary positive electrode material having the polycrystalline structure and the ternary positive electrode material having the monocrystalline or quasi-monocrystalline structure, the resistance to crushing of the ternary positive electrode material particles having the monocrystalline or quasi-monocrystalline structure can be utilized to improve the processing performance and mechanical performance of the entire positive electrode plate, and the combination of the ternary positive electrode materials having the polycrystalline structure and the monocrystalline or quasi-monocrystalline structure is conducive to achieving a close stacking of the particles, thereby further improving the compaction density of the positive electrode plate and increasing the energy density of the lithium ion battery. More preferably, a mass ratio of the ternary positive electrode material Liₓ₂(Niₐ₂Co_{b2}M'_{c2})_{1-d2}N'_{d2}O_{2-y2}A'_{y2} having the polycrystalline structure to the ternary positive electrode material Liₓ₂(Niₐ₂Co_{b2}M'_{c2})_{1-d2}N'_{d2}O_{2-y2}A'_{y2} having the monocrystalline or quasi-monocrystalline structure ranges from 95:5 to 50:50. Further preferably, the ternary positive electrode material Liₓ₂(Niₐ₂Co_{b2}M'_{c2})_{1-d2}N'_{d2}O_{2-y2}A'_{y2} having polycrystalline structure has a volume average particle size of 8 µm to 18 µm, and the ternary positive electrode material Liₓ₂(Niₐ₂Co_{b2}M'_{c2})_{1-d2}N'_{d2}O_{2-y2}A'_{y2} having monocrystalline or quasi-monocrystalline structure has a volume average particle size of 2 µm to 6 µm.

In the positive electrode plate according to the first aspect of the present disclosure, the second sub-layer can be a single-layered structure or a multi-layered structure.

In the positive electrode plate according to the first aspect of the present disclosure, preferably, a ratio of a thickness of the first sub-layer to a total thickness of the positive electrode active material layer is in a range of 0.05 to 0.75. In the positive electrode active material layer, the ratio of the thickness of the first sub-layer to the total thickness of the positive electrode active material layer can further influence the mechanical strength, compaction density, and gas production of the positive electrode plate. When the ratio of the thickness of the first sub-layer to the total thickness of the positive active material layer is relatively small, the improvement to the overall mechanical strength of the positive electrode plate is insignificant, and the positive electrode active material in the second sub-layer can still be crushed by an external force. When the ratio of the thickness of the first sub-layer to the total thickness of the positive electrode active material layer is relatively large, because of the anisotropy and orientated growth of the positive electrode active material particles of the monocrystalline or quasi-monocrystalline structure, it is difficult to improve the compaction density of the positive electrode plate, the battery has a large polarization, the energy density of the lithium ion battery cannot be further improved and the direct current internal resistance of the battery will be also increased. More preferably, the ratio of the thickness of the first sub-layer to the total thickness of the positive active material layer is in a range of 0.15 to 0.5.

In the positive electrode plate according to the first aspect of the present disclosure, a ratio C/T of a reversible capacity per unit area C of the positive electrode active material layer to the total thickness T of the positive electrode active material layer is preferably greater than or equal to 360 mAh/cm³. The appropriate combination of the positive electrode active material in the first sub-layer and the positive electrode active material in the second sub-layer helps to obtain a lithium ion battery with high volume energy density. More preferably, the ratio C/T of the reversible capacity per unit area C of the positive electrode active material layer to the total thickness T of the positive electrode active material layer is greater than or equal to 500 mAh/cm³.

In the positive electrode plate according to the first aspect of the present disclosure, the first sub-layer and the second sub-layer can further include a conductive agent and a binder. The types and contents of the conductive agent and the binder are not specifically limited and can be selected according to actual needs. The specific types and contents of the conductive agent and the binder in the first sub-layer and the second sub-layer can be the same or different.

In the positive electrode plate according to the first aspect of the present disclosure, the coating processes of the first sub-layer and the second sub-layer are not specifically limited, and can be selected according to actual needs. For example, the first sub-layer and the second sub-layer can be coated in separate coating processes or in one coating process.

The positive electrode plate according to the first aspect of the present disclosure includes one or more additional structural layers provided between the first sub-layer and the second sub-layer or between the second sub-layer and the positive electrode current collector. The one or more additional structural layers contain a third positive electrode active material, a conductive agent and a binder. The specific types and contents of the third positive electrode active material, the conductive agent, and the binder are not specifically limited, and can be selected according to actual needs. Preferably, the third positive electrode active material can be selected from silicate positive electrode material, spinel-type lithium manganate, and the like.

In the positive electrode plate according to the first aspect of the present disclosure, in view of processing and overall design of the positive electrode plate, the positive electrode current collector preferably has a thickness of 5 µm to 20 µm. If the positive electrode current collector is too thick, the energy density of the lithium ion battery can be too low. If the positive electrode current collector is too thin, it is disadvantageous for the processing of the positive electrode plate.

The lithium ion battery according to the second aspect of the present disclosure will be described as follow.

The lithium ion battery according to the second aspect of the present disclosure includes the positive electrode plate according to the first aspect of the present disclosure, a negative electrode plate, a separator, and an electrolytic solution. The specific types of the negative electrode plate, the separator, and the electrolytic solution are not specifically limited, and can be selected according to actual needs.

The present disclosure is further illustrated below in conjunction with the embodiments. It is to be understood that these embodiments are not intended to limit the scope of the application.

The lithium ion batteries of Embodiments 1-19 and Comparative Examples 1-11 were all prepared according to the following method.

### (1) Preparation of positive electrode plate

A first positive electrode active material listed in Table 1, a binder polyvinylidene fluoride, and a conductive agent acetylene black were mixed at a mass ratio of 98:1:1, and then N-methylpyrrolidone (NMP) was added and uniformly stirred in a vacuum mixer to obtain a first positive electrode slurry. A second positive electrode active material listed in Table 1, a binder polyvinylidene fluoride and a conductive agent acetylene black were mixed at a mass ratio of 98:1:1, then N-methylpyrrolidone (NMP) was added and uniformly stirred in a vacuum mixer to obtain a second positive electrode slurry. The second positive electrode slurry was uniformly coated on one surface of an aluminum foil, as the positive electrode current collector, to form a second sub-layer. The first positive electrode slurry was uniformly coated on a surface of the second positive electrode slurry to form a first sub-layer. After drying in an oven at a temperature of 100 °C to 130 °C, the other surface of the aluminum foil was subjected to the same coating process as described above, then cold pressed and cut to obtain a positive electrode plate.

### (2) Preparation of negative electrode plate

A negative electrode active material graphite, a thickener sodium carboxymethylcellulose, a binder styrene-butadiene rubber, and a conductive agent acetylene black were mixed at a mass ratio of 97:1:1:1, the deionized water was added and stirred in a vacuum mixer to obtain a negative electrode slurry. The negative electrode slurry was uniformly coated on a copper foil having a thickness of 8 µm. The copper foil was naturally dried at room temperature, then transferred to an oven to be dried at 120 °C for 1 hour, and then subjected to cold pressing and cutting to obtain a negative electrode plate.

### (3) Preparation of electrolytic solution

A mixture of ethylene carbonate (EC), ethyl methyl carbonate (EMC), and diethyl carbonate (DEC) in a volume ratio of 20:20:60 was used as an organic solvent. In a argon atmosphere glove box having a water content of <10 ppm, the sufficiently dried LiPF₆ was dissolved in the organic solvent, and uniformly mixed to obtain an electrolytic solution, in which the concentration of LiPF₆ was 1 mol/L.

### (4) Preparation of separator

A polypropylene film having a thickness of 12 µm was used as the separator.

### (5) Preparation of lithium ion battery

The positive electrode plate, the separator and the negative electrode plate were stacked in a sequence that the separator, as an insulator, is disposed between the positive and negative electrode plates, and they were then wound into a square bare cell. The bare cell was then placed in an aluminum plastic film, baked at 80°C to remove water, injected with the electrolytic solution and sealed, following by standing, hot-cold pressing, chemical formation, fixture, grading, etc., so as to obtain a lithium ion battery.

The test procedures of the lithium ion battery are described as follow.

### (1) Volume energy density test of lithium ion battery

In a 25 °C incubator, the lithium ion battery was fully charged under 1C, and then discharged under 1C. After the discharge was completed, the discharge capacity of the lithium ion battery was calculated.

The surface area S and the total thickness T of the positive electrode active material layer in the prepared positive electrode plate were measured.

Reversible capacity per unit area C (mAh/cm²) of the positive electrode active material layer = discharge capacity of the lithium ion battery / surface area S of the positive electrode active material layer.

Ratio C/T (mAh/cm³) of the reversible capacity per unit area of the positive electrode active material layer to the total thickness of the positive electrode active material layer = the reversible capacity per unit area C of the positive electrode active material layer / the total thickness T of the positive electrode active material layer.

The volume energy density of the lithium ion battery was evaluated with the ratio of the reversible capacity per unit area of the positive electrode active material layer to the total thickness of the positive electrode active material layer.

### (2) High temperature gas production test of lithium ion battery

After the lithium ion battery was charged at 1 C at 25 °C, it was stored in an 80 °C incubator for 10 days. An initial volume of the lithium ion battery and a volume after 10 days storage were measured by the drainage method, so as to calculate the volume expansion ratio of the lithium ion battery..

The volume expansion ratio (%) of the lithium ion battery = (volume after 10 days storage / initial volume - 1) × 100%.

### (3) Cycle performance test of lithium ion battery

The lithium ion battery was charged at a rate of 1 C at 25 °C, discharged at a rate of 1 C, then subjected to a full charge and full discharge cycle test, until the capacity of the lithium ion battery was reduced to 80% of the initial capacity, and the number of cycles was recorded.

**Table 1: Parameters and performance test results of Embodiments 1-19 and Comparative Examples 1-11**

| | First Sub-Layer | | | Second Sub-Layer | | | C/T (mAh/cm³) | Number of Cycles | Volume Expansion Ratio |
|---|---|---|---|---|---|---|---|---|---|
| | First Positive Electrode Active Material | D1 (µm) | Thickne SSS (µm) | Second Positive Electrode Active Material | D2 (µm) | Thicknesss (µm) | | | |
| Embodiment 1 | monocrystalline NCM111 | 5 | 30 | polycrystalline LiFePO₄ | 2 | 30 | 420 | 4201 | 47% |
| Embodiment 2 | monocrystalline NCM111 | 5 | 30 | polycrystalline LiCoO₂ | 10 | 30 | 551 | 1094 | 46% |
| Embodiment 3 | monocrystalline NCM111 | 5 | 30 | polycrystalline LiMn₂O₄ | 10 | 30 | 396 | 1154 | 48% |
| Embodiment 4 | monocrystalline NCM111 | 5 | 30 | polycrystalline LiNiO₂ | 10 | 30 | 578 | 556 | 46% |
| Embodiment 5 | monocrystalline NCM111 | 5 | 30 | polycrystalline NCM523 | 10 | 30 | 529 | 3546 | 82% |
| Embodiment 6 | monocrystalline NCM523 | 5 | 30 | polycrystalline NCM523 | 10 | 30 | 543 | 3214 | 89% |
| Embodiment 7 | monocrystalline NCM811 | 5 | 5 | polycrystalline NCM811 | 10 | 80 | 656 | 2431 | 165% |
| Embodiment 8 | monocrystalline NCM811 | 5 | 10 | polycrystalline NCM811 | 10 | 60 | 656 | 2464 | 162% |
| Embodiment 9 | monocrystalline NCM811 | 5 | 20 | polycrystalline NCM811 | 10 | 50 | 646 | 2503 | 159% |
| Embodiment 10 | monocrystalline NCM811 | 5 | 30 | polycrystalline NCM811 | 10 | 30 | 653 | 2521 | 156% |
| Embodiment 11 | monocrystalline NCN1811 | 5 | 60 | polycrystalline NCM811 | 10 | 20 | 643 | 2531 | 155% |
| Embodiment 12 | monocrystalline NCM811 | 5 | 50 | polycrystalline NCM811 | 10 | 10 | 646 | 2535 | 155% |
| Embodiment 13 | monocrystalline NCM811 | 5 | 30 | polycrystalline NCM811:mono crystalline NCM811 =50:50 | 7 | 30 | 662 | 2604 | 152% |
| Embodiment 14 | monocrystalline NCM811 | 2 | 30 | polycrystalline NCM811:mono crystalline NCM811 =50:50 | 7 | 30 | 666 | 2534 | 154% |
| Embodiment 15 | monocrystalline NCM811 | 8 | 30 | polycrystalline NCM811:mono crystalline NCM811 =50:50 | 7 | 30 | 648 | 2655 | 149% |
| Embodiment 16 | monocrystalline NCM811 | 1.5 | 30 | polycrystalline NCM811:mono crystalline NCM811 =50:50 | 7 | 30 | 666 | 2456 | 157% |
| Embodiment 17 | monocrystalline NCM811 | 5 | 30 | polycrystalline NCM811 :mono crystalline NCM811=80:20 | 8 | 30 | 679 | 2774 | 149% |
| Embodiment 18 | monocrystalline NCM811 | 5 | 30 | polycrystalline NCM811:mono crystalline NCM811=90:10 | 9 | 30 | 683 | 2745 | 150% |
| Embodiment 19 | monocrystalline NCM811 | 5 | 30 | polycrystalline NCM811:mono crystalline NCM811=95:5 | 10 | 30 | 673 | 2654 | 153% |
| Comparative Example 1 | / | / | / | polycrystalline LiFePO₄ | 2 | 30 | 336 | 5000 | 45% |
| Comparative Example 2 | / | / | / | polycrystalline LiCoO₂ | 10 | 30 | 595 | 1000 | 48% |
| Comparative Example 3 | / | / | / | polycrystalline LiMn₂O₄ | 10 | 30 | 330 | 1000 | 52% |
| Comparative Example 4 | / | / | / | polycrystalline LiNiO₂ | 10 | 30 | 629 | 326 | 65% |
| Comparative Example 5 | / | / | / | polycrystalline NCM523 | 10 | 60 | 543 | 3052 | 97% |
| Comparative Example 6 | / | / | / | polycrystalline NCM811 | 10 | 60 | 663 | 2021 | 172% |
| Comparative Example 7 | / | / | / | polycrystalline NCM811:mono crystalline NCM811=50:50 | 7 | 60 | 666 | 2142 | 167% |
| Comparative Example 8 | / | / | / | polycrystalline NCM811:mono crystalline NCM811=95:5 | 10 | 60 | 673 | 2325 | 169% |
| Comparative Example 9 | monocrystalline NCM111 | 5 | 60 | / | / | / | 490 | 3654 | 45% |
| Comparative Example 10 | monocrystalline NCM523 | 5 | 60 | / | / | / | 532 | 3028 | 70% |
| Comparative Example 11 | monocrystalline NCM811 | 5 | 60 | / | / | / | 636 | 2253 | 143% |

In Comparative Examples 1 to 11, the positive electrode active material layer is a single layered structure. In Embodiments 1 to 19, the positive electrode active material layer includes both the first sub-layer and the second sub-layer. In Comparative Example 1, the polycrystalline LiFePO₄ has the advantages of low gas production and long cycle life, but its gram capacity is low, resulting in a low volume energy density of the lithium ion battery that does not meet the requirement on the high energy density of the lithium ion battery. In Embodiment 1, the polycrystalline LiFePO₄ is used as the second positive electrode active material, and the monocrystalline ternary positive electrode material NCM111 is used as the first positive electrode active material, the volume energy density of the lithium ion battery is remarkably improved, and the lithium-ion battery has both good cycle performance and low gas production. In Comparative Examples 2-4, the polycrystalline LiCoO₂, the polycrystalline LiMn₂O₄, and the polycrystalline LiNiO₂ have a weak compression property, and the positive electrode active material particles at the surface of the positive electrode plate are easily to be crushed under pressure, thus causing a poor cycle performance of the lithium ion batteries. In Embodiments 2-4, the ternary positive electrode material NCM111 having the monocrystalline structure is used as the first positive electrode active material, and the polycrystalline structured LiCoO₂, LiMn₂O₄, and LiNiO₂ are used as the second positive electrode active material, respectively, in which the cycle performance of the lithium ion battery is improved, and at the same time the gas production of the lithium ion batteries is reduced to a certain extent. In Comparative Examples 5-6, the polycrystalline ternary positive electrode materials (for example, NCM523, NCM811) have the advantage of high gram capacity, but are likely to be crushed during the cold pressing, such that lots of primary particles are exposed to the electrolyte and thus have more side reactions with the electrolyte, thereby resulting in a decrease in the cycle performance of the lithium ion battery and an increase in gas production. In Embodiments 5 and 7, the polycrystalline NCM523 and NCM811 are used as the second positive electrode active material, respectively, and the monocrystalline NCM111 is used as the first positive electrode active material, in which the cycle performance of the lithium ion batteries is improved and the gas production of the lithium ion batteries is also reduced to some extent. In Comparative Examples 7-8, a mixture of a monocrystalline ternary positive electrode material and a polycrystalline ternary positive electrode material is used as the positive electrode active material, the compaction density and mechanical strength of the positive electrode plate is improved to some extent, but the improvement to the compressive strength of the positive electrode plate is not significant, and a small amount of particles of the polycrystalline ternary positive electrode material is still easily to be crushed, which causes a decrease in the cycle performance of the lithium ion battery and an increase in gas production. In Comparative Examples 9-11, all of the positive electrode active materials are the monocrystalline ternary positive electrode materials (for example, NCM111, NCM523, NCM811), the monocrystalline ternary positive electrode materials have the advantages of high mechanical strength and resistance to crushing, which can reduce the gas production amount of the lithium ion battery, but the monocrystalline particles also have a large polarization, and the capacity is actually poorly utilized, which inevitably leads to a lost of the volume energy density of the lithium ion battery.

In Embodiments 1-19, since the positive electrode plate includes both the first sub-layer and the second sub-layer, the high-temperature storage performance of the lithium ion batteries is remarkably improved, and at the same time the lithium ion batteries also have a high volume energy density. The reason is in that the ternary positive electrode material having the monocrystalline structure in the first sub-layer has a high mechanical strength and resistance to crushing, and thus can significantly alleviate the problem that the particles are easily to be crushed during the cold pressing process of the positive electrode plate. In this regard, the compaction density of the positive electrode plate is improved, and the gas production caused by the crushing of particles is also reduced. In addition, the first sub-layer can also has a certain protective effect on the structural stability of the second sub-layer, which is conducive to the high gram capacity of the second positive electrode active material, thereby increasing the volume energy density of the lithium ion batteries.
Further, when the second positive electrode active material is a mixture of a ternary positive electrode material having a monocrystalline structure and a ternary positive electrode material having a polycrystalline structure, the lithium ion battery can have a higher volume energy density. The reason is in that, when the monocrystalline ternary positive electrode material is used in combination with the polycrystalline ternary positive electrode material, the monocrystalline particles can achieve a close stacking of the particles, increase the compaction density of the positive electrode plate, and thus further increase the volume energy density of the lithium ion battery, while further improving the structural stability, processing performance and mechanical performance of the positive electrode plate as a whole.

## Claims

1. A positive electrode plate, comprising:
a positive electrode current collector; and
a positive electrode active material layer disposed on the positive electrode current collector,
**characterized in that** the positive electrode active material layer comprises a first sub-layer and a second sub-layer, the first sub-layer being an outermost sub-layer of the positive active material layer, and the second sub-layer being disposed between the positive electrode current collector and the first sub-layer,
the first sub-layer comprises a first positive electrode active material, the second sub-layer comprises a second positive electrode active material, and the first positive electrode active material is one or more of a ternary positive electrode material having a monocrystalline or quasi-monocrystalline structure, and a coating-modified material thereof,
the ternary positive electrode material has a molecular formula of Liₓ₁(Niₐ₁Co_{b1}M_{c1})_{1-d1}N_{d1}O_{2-y1}A_{y1}, wherein M is one or two of Mn and Al; N is selected from the group consisting of Mg, Ti, Zn, Zr, Nb, Sr, Y, Al, and combinations thereof; A is selected from the group consisting of F, Cl, S, and combinations thereof; 0.95≤x1≤1.05, 0<a1<1, 0<b1<1, 0<c1<1, a1+b1+c1=1, 0≤d1≤0.1, and 0≤y1≤0.1,
the coating-modified material comprises a coating on the ternary positive electrode material having the molecular formula of Liₓ₁(Niₐ₁Co_{b1}M_{c1})_{1-d}N_{d1}O_{2-y1}A_{y1}, and the coating is selected from the group consisting of a carbon coating, a graphene coating, an oxide coating, an inorganic salt coating, a conductive polymer coating, and combinations thereof.

2. The positive electrode plate according to claim 1, **characterized in that** at least a portion of the second positive electrode active material has a polycrystalline structure,
preferably, at least a portion of the second positive electrode active material has a polycrystalline structure, and the remainder of the second positive electrode active material has a monocrystalline or quasi-monocrystalline structure.

3. The positive electrode plate according to claim 1 or 2, **characterized in that** the second positive electrode active material is one or more of lithium cobalt oxide, lithium nickel oxide, lithium manganese oxide, lithium nickel manganese oxide, a ternary positive electrode material, lithium-containing phosphate having an olivine structure, and a doping-modified and/or coating-modified composite material thereof.

4. The positive electrode plate according to any one of the preceding claims, **characterized in that** the second positive electrode active material is one or more of a ternary positive electrode materials having a molecular formula of Liₓ₂(Niₐ₂Co_{b2}M'_{c2})_{1-d2}N'_{d2}O_{2-y2}A'_{y2}, and a coating-modified material thereof, where M' is one or two of Mn and A; N' is selected from the group consisting of Mg, Ti, Zn, Zr, Nb, Sr, Y, Al, and combinations thereof; A' is selected from the group consisting of F, Cl, S, and combinations thereof; 0.7≤x2≤1.05, 0<a2<1, 0<b2<1, 0<c2<1, a2+b2+c2=1, 0≤d2≤0.1, and 0≤y2≤0.1,
the coating-modified material comprises a coating on the ternary positive electrode material having the molecular formula of Liₓ₂(Niₐ₂Co_{b2}M'_{c2})_{1-d2}N'_{d2}O_{2-y2}A'_{y2}, and the coating is selected from the group consisting of a carbon coating, a graphene coating, an oxide coating, an inorganic salt coating, a conductive polymer coating, and combinations thereof.

5. The positive electrode plate according to any one of the preceding claims, **characterized in that** the second positive electrode active material is a mixture of a ternary positive electrode material having a polycrystalline structure and a ternary positive electrode material having a monocrystalline or quasi-monocrystalline structure,
preferably, in the second positive electrode active material, a mass ratio of the ternary positive electrode material having a polycrystalline structure to the ternary positive electrode material having a monocrystalline or the quasi-monocrystalline structure ranges from 95:5 to 50:50.

6. The positive electrode plate according to any one of the preceding claims, **characterized in that** a molar content a1 of nickel element in the molecular formula of the first positive electrode active material is smaller than or equal to a molar content a2 of nickel element in the molecular formula of the second positive electrode active material.

7. The positive electrode plate according to any one of the preceding claims, **characterized in that** a ratio of a thickness of the first sub-layer to a total thickness of the positive electrode active material layer is in a range of 0.05 to 0.75, preferably in a range of 0.15 to 0.5.

8. The positive electrode plate according to any one of the preceding claims, **characterized in that** the first positive electrode active material has a volume average particle size D1 in a range of 1 µm to 10 µm,
the second positive electrode active material has a volume average particle size D2 in a range of 5 µm to 15 µm, and
a relationship between the volume average particle size D1 of the first positive electrode active material and the volume average particle size D2 of the second positive electrode active material is: 0.2×D2≤D1≤0.8×D2.

9. The positive electrode plate according to any one of the preceding claims, **characterized in that** the positive electrode plate further comprises one or more additional structural layers provided between the first sub-layer and the second sub-layer or between the second sub-layer and the positive electrode current collector, wherein the one or more additional structural layers contain a third positive electrode active material, a conductive agent and a binder.

10. A lithium ion battery, **characterized in that** the lithium ion battery comprises the positive electrode plate according to any one of the preceding claims.
